# EUROPEAN PATENT SPECIFICATION

(11) **EP 4 105 010 B1**
(45) Date of publication and mention of the grant of the patent: **07.08.2024**
(21) Application number: 21305844.9
(22) Date of filing: 18.06.2021
(51) Int. Cl.: B29D 11/00

(54) **METHOD FOR COATING LENSES WITH LENSLETS WITH AN IMPROVED CONTROL ON POWER SHIFT**
VERFAHREN ZUR BESCHICHTUNG VON LINSEN MIT LENSLETS MIT VERBESSERTER STEUERUNG DER LEISTUNGSVERSCHIEBUNG
PROCÉDÉ DE REVÊTEMENT DE LENTILLES AVEC DES MICROLENTILLES AYANT UN CONTRÔLE AMÉLIORÉ DU CHANGEMENT DE PUISSANCE

(43) Date of publication of application: 21.12.2022
(73) Proprietor: ESSILOR INTERNATIONAL, 94220 Charenton-Le-Pont (FR)
(72) Inventor: DUC, Olivier, 71350 SAINT LOUP GÉANGES (FR); GUILLOU, Hélène, 94880 NOISEAU (FR)
(74) Representative: Plasseraud IP

(56) References cited:
- EP-A1- 3 640 712
- US-A1- 2009 026 640
- US-A1- 2013 022 739
- US-A1- 2015 277 146

## Description

### Field of the invention

The disclosure belongs to the field of ophthalmic optics. It relates to methods for coating an optical lens having a main surface at least partly covered with lenslets and corresponding assembly, computer program and storage medium.

### Background of the invention

In the ophthalmic industry, it has been known for decades to apply a surface treatment to optical lenses.

For example, optical articles such as ophthalmic lenses generally comprise a base-lens substrate which is shaped in order to provide a desired optical power, and an anti-abrasion coating covering at least one surface of the base-lens substrate to prevent the latter from being damaged by scratches.

To coat an optical lens with a hard coating, the most common methods are dip-coating and spin-coating.

A known reoccurring issue with dip-coating methods is controlling the thickness of the resulting hard coating.

For a number of applications, it has been found desirable to provide on the base-lens substrate a plurality of lenslets, such as microlenses, providing a local change of the power of the optical article. For instance, it is known from US 2017/0131567 a lens comprising a plurality of microlenses formed on a surface of the lens, the local change of power provided by the microlenses enabling to suppress or slow down the progress of myopia.

In this regard, coating a substrate comprising lenslets on at least one of its surfaces impacts the resulting optical power at the lenslets. This impact may be compensated by adjusting the optical power of the lenslets beforehand, when manufacturing the substrate. But such adjustment may only be calculated for compensating the impact of a specific expected thickness of the hard coating.

A method or adjusting the optical power of the finished lens by modifying the shape of the main surface is disclosed in document EP 3 640 712 A1.

A method for detecting and correcting defects due to the coating process is disclosed in document US 2009/0026640 A1.

There is thus a need for an improved control of the thickness of the coating fluid or solid layer deposited on the optical lens during the dipping process, in order to have a better control over the power shift of the lenslets due to the coating layer.

### Summary of the invention

The invention aims at improving these aspects, by providing a method with a better control over the thickness of the layer of coating fluid or solid.

To that end, the invention relates to a method for coating a plurality of optical lenses according to claim 1, preferably ophthalmic lenses, having at least one main surface at least partly covered with lenslets, the method comprising:
- dipping at least one first optical lens from the plurality of optical lenses into a coating fluid,
- withdrawing the at least one first optical lens from the coating fluid at a controlled withdrawal speed,
- measuring a thickness of a coating deposited on the at least one first optical lens,
- determining an adjusted withdrawal speed based on the measured thickness, and
- repeating the steps of dipping, withdrawing, measuring and determining on at least other optical lens from the plurality of optical lenses, using the adjusted withdrawal speed during the withdrawing step.

This method allows to have a better control over the thickness of the layer of coating fluid or solid. This in turn improves control on the power shift of the microlenses due to the coating layer. It enhances the distribution of the optical power of the microlenses to gain a better reliability and efficiency of all final products.

The method may comprise a step of drying the coating layer deposited on the first optical lens, the measuring step being implemented between the withdrawing step and the drying step. This feature allows for a faster adjustment of the withdrawal speed by measuring the thickness as early as possible and improves the response speed of the adjustment.

The method may comprise a step of drying the coating layer deposited on the first optical lens and a step of hardening the coating layer deposited on the first optical lens, the measuring step being implemented between the drying step and the hardening step.

This feature allows for the measured thickness of the layer of coating fluid to be close to the final thickness of this layer in the finished product, for a more precise control over said final thickness, while keeping the waiting time before the adjustment of the withdrawal speed low. The method may comprise a step of hardening the coating layer deposited on the first optical lens, the measuring step being implemented after the hardening step.

This feature allows for the most precise control over the final thickness of the coating layer, at the expense of reactivity of the adjustment of the withdrawal speed.

The measuring step may be implemented through a non-contact optical method.

This feature allows for a fast and accurate measurement and does not affect the coated layer during the drying and/or hardening.

The method may comprise a continuous adjustment of a viscosity of the coating fluid in a dipping assembly where the dipping step is implemented.

This feature allows for a consistent relation between the withdrawal speed and the thickness of the layer of coating fluid deposited on the lens.

The adjusted withdrawal speed may be determined based on an empirical function of a difference between the measured thickness of the coating layer and a desired nominal thickness.

This feature allows for an accurate adjustment of the withdrawal speed for a specific fluid and a known type of lens.

The empirical function may further depend on fluidical properties of the coating fluid and surface mechanical and physical properties of the main surface and lenslets of the optical lens. The withdrawal speed may be kept constant during the withdrawing step.

The withdrawal speed may progressively decrease during the withdrawing step.

The invention also relates to a coating assembly according to claim 11 for coating optical lenses having at least one main surface at least partly covered with lenslets, the assembly comprising:
- a dipping assembly comprising a tank for receiving a coating fluid and at least one mobile member for dipping at least one lens in the coating fluid and withdrawing the lens at a controlled withdrawal speed,
- a measuring system for measuring a thickness of a coating layer deposited on the at least one lens, and
- a controlling system comprising a processing unit and a memory, the controlling system being configured for controlling the measuring system and the mobile member,
wherein the controlling system is configured to determine an adjusted withdrawal speed based on the measured thickness.

The invention also relies on a computer program according to claim 12 comprising one or more stored sequences of instructions that are accessible to a processing unit and which, when executed by the processing unit, cause the processing unit to carry out at least part of the method as described above.

The invention relates as well on a non-transitory storage medium according to claim 13 storing one or more stored sequences of instructions of the computer program as described above.

### Brief description of the drawings

- Figure 1 is a side view of a lens obtained through a method according to the invention,
- Figure 2 is a schematic representation of the steps of a method according to the invention, and
- Figure 3 is a schematic view of a coating assembly for implementing the method according to the invention,
- Figure 4 and 5 are plots of a thickness of the coating layer and of a power shift of the lenslets obtained when implementing a manufacturing method from prior art, and
- Figures 6 and 7 are plots of a thickness of the coating layer and of a power shift of the lenslets obtained when implementing a manufacturing method according to the invention.

### Detailed description of embodiments

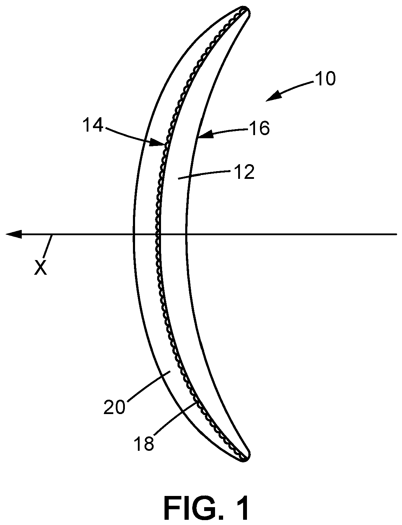

An optical lens 10 obtained through a method according to the invention is shown on figure 1. The optical lens 10 is preferably an ophthalmic lens, comprising a main body 12 made of organic or mineral material, defining two main surfaces comprising a convex side 14 (also called front-side or object-side) and a concave side 16 (also called back-side or eyeball-side). The optical lens 10 comprises lenslets 18 arranged on the convex side, and a coating layer 20 extending at least over the lenslets 18 and preferably over both main surfaces.

Alternatively, the lenslets 18 may be arranged on the concave side 16 of the optical lens 10, or on both the convex side 14 and the concave side 16.

More particularly, in what follows, a lenslet is a discrete optical element inducing a local change in optical power of an optical device like the optical lens 10.

The lenslets 18 may form bumps and/or recesses on the main surface they are arranged onto. The outline of the lenslets 18 may be round or polygonal, for example hexagonal.

According to an embodiment, the lenslets 18 may be microlenses. A microlens may be spherical, toric, or have an aspherical shape. A microlens may have a single focus point, or cylindrical power, or non-focusing point.

In preferred embodiments, lenslets or microlenses can be used to prevent progression of myopia or hyperopia. In that case, the optical lens 10 comprises a main body 12 providing an optical power for correcting myopia or hyperopia, and the lenslets or microlenses may provide respectively an optical power greater than the optical power of the main body 12 if the wearer has myopia, or an optical power lower than the optical power of the main body 12 if the wearer has hyperopia.

In other embodiments, the lenslets 18 or microlenses may be Fresnel structures, diffractive structures defining each a Fresnel structure, permanent technical bumps or phase-shifting elements. They can also be refractive optical elements such as microprisms or light-diffusing optical elements such as small protuberances or cavities, or any type of element generating roughness on the main surfaces of the optical lens 10.

In an embodiment, the lenslets 18 or microlenses may be π-Fresnel lenslets as described in US2021109379 A1, i.e. Fresnel lenslets which phase function has π phase jumps at the nominal wavelength, as opposition to unifocal Fresnel lenses which phase jumps are multiple values of 2π. Such lenslets include structures that have a discontinuous shape. In other words, the shape of such structures may be described by an altitude function, in terms of distance from the base level of the main surface of the optical lens the lenslet belongs to, which exhibits a discontinuity, or which derivative exhibits a discontinuity.

The lenslets 18 of the present invention may have a contour shape being inscribable in a circle having a diameter greater than or equal to 0.5 micrometers (µm) and smaller than or equal to 1.5 millimeters (mm).

The lenslets 18 of the present invention have a height, measured in a direction perpendicular to the main surface they are arranged onto, that is greater than or equal to 0.1 µm and less than or equal to 50 µm.

The main surface can be defined as a surface, that can be a plano, spherical, sphero-cylindrical or even complex surface, that includes the central point of every microstructure. This main surface can be a virtual surface, when microstructures are embedded in the lens or close or identical to the ophthalmic lens physical outer surfaces 14, 16 when microstructures are not embedded.

The height of the microstructure can be then determined relative to a local perpendicular axis to this main surface, and calculating, for each point of the microstructure, the difference between the maximum positive deviation minus the minimum negative deviation to the main surface, along the axis.

The lenslets 18 may have periodical or pseudo periodical layout or may also have randomized positions. Exemples of layouts for lenslets may be a grid with constant grid step, a honeycomb layout, multiple concentric rings, or a contiguous layout e.g. no space in between microstructures.

These lenslets 18 may provide optical wave front modification in intensity, curvature, or light deviation, where the modification of the wave front in intensity is such that structures may be absorptive and may locally absorb wave front intensity with a range from 0% to 100%, where the modification in curvature is such that the structure may locally modify wave front curvature with a range of +/- 20 Diopters, and the modification in light deviation is such that the structure may locally scatter light with angle ranging from +/- 1 ° to +/- 30°.

A distance between lenslets 18 may range from 0 (contiguous) to 3 times a size of the structure (separate microstructures).

The coating layer 20 is preferably of the type known as a hard coating. Hard coatings are generally monolayered coatings but may also have a bi-layered structure. Hard coatings are for example made of acrylic compounds, epoxy compounds, epoxy acrylic compounds, silane compounds, epoxysilane compounds, polyurethane acrylic compounds, siloxane compounds and any mixture of the aforesaid compounds. Hard coatings are robust, their edges are less susceptible to degrade than those of softer coatings when exposed to moisture and through typical use, and their transmission of wavelengths remains constant over time and through use.

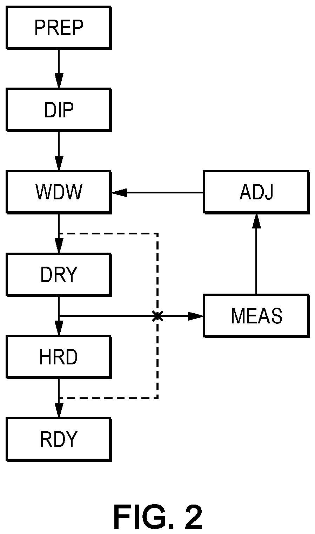

The coating layer 20 is applied through a method according to the invention, described below in reference to figure 2, based on the technique of dip-coating.

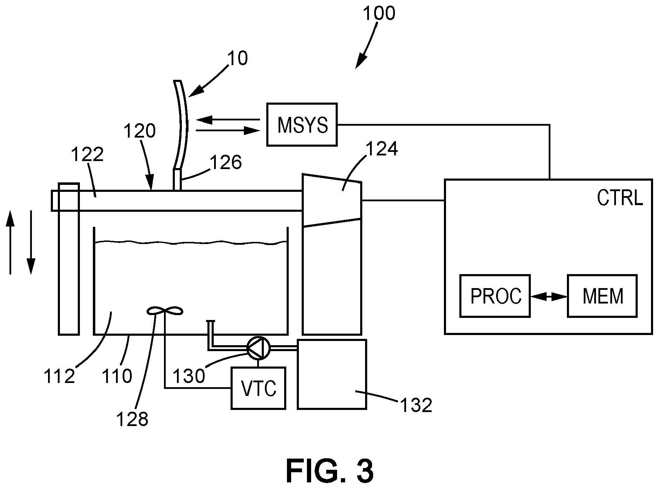

The method is implemented using a coating assembly 100, an example of which is shown on figure 3.

The coating assembly 100 comprises a dipping assembly, comprising a tank 110 containing a coating fluid 112 and a mobile member 120 for dipping the optical lens 10 into the coating fluid 112. The coating assembly also comprises a controlling system CTRL and a measuring system MSYS.

The coating fluid 112 is for example a solution of a material for forming the coating layer 20, dissolved in a volatile solvent. Such a coating fluid 112 is, for example, a varnish.

The mobile member 120 comprises a rod 122, mobile along a substantially vertical dipping axis, a driving assembly 124 for driving the rod 122 along the dipping axis, and at least one lens holder 126 placed on the rod 122, able to hold at least one optical lens 10 during the method.

The controlling system comprises a processing unit PROC configured to execute programs and a memory MEM storing instructions and data.

The controlling system is configured for controlling the measuring system and the mobile member.

The memory stores one or more stored sequences of instructions that are accessible to the processing unit and which, when executed by the processing unit, cause the controlling system to carry out the described method.

The measuring system is configured for measuring a thickness of the coating layer 20 deposited on the optical lens 10.

The measuring system is advantageously adapted to measure said thickness through a non-contact method, preferably an optical method.

Examples of such methods include spectral reflectance methods or ellipsometry methods. The measuring system is for example a F10-AR spectrometer with UPG-F10-AR-HC software upgrade by FILMETRICS, a F10-HC spectrometer by FILMETRICS, or an Arcspectro Thinfilm NIR spectrometer by ARCOPTICS.

The measuring system may comprise a measuring probe mounted on an articulated arm for bringing said probe close to the optical lens 10, without contact, and then remove the probe after the measurement.

The coating assembly 100 may further comprise a viscosity measuring tool 128 submerged in the coating fluid 112, connected to a viscosity control system VCT. The viscosity control system VCT is also connected to at least one pump 130 fluidically connected to at least one side tank 132 containing a viscosity agent and further connected to the tank 110.

The viscosity controlling system VCT is configured to monitor the viscosity of the coating fluid 112 during the method, by measuring the viscosity periodically with the viscosity measuring tool 128 and comparing the measured viscosity value with a predetermined desired value. The viscosity control system is also configured to actuate the at least one pump 130 to inject one or more viscosity agents in the tank 112 containing the coating fluid 112 to adjust its viscosity closer to the predetermined desired value.

The method comprises a preparing step PREP, during which at least one optical lens 10 is prepared and loaded into the coating assembly 100, on one of the les holders 126.

Each optical lens 10 loaded into the coating assembly 100 comprises the main body 12 and lenslets 18 on at least one main surface as described above.

If the coating fluid 112 is to be applied only on one of the main surfaces of the optical lens 10, or on part of such surface, the preparation step comprises covering the remainder of the optical lens 10 with a film that is to be peeled off afterwards.

The method then comprises a dipping step DIP, during which the optical lens 10 is submerged in the coating fluid 112 contained in the tank 110.

The rod 122 is driven down by the driving assembly 124, under control of the controlling system, until the optical lens 10 is partially or completely submerged, as desired.

The method then comprises a withdrawing step WDW, during which the optical lens 10 is withdrawn from the coating fluid with a controlled withdrawal speed, leaving a deposited layer of the coating fluid on at least part of the optical lens 10.

A thickness of the deposited layer depends on the withdrawal speed, as well as on the fluidic properties of the coating fluid 112 and on the physical and mechanical properties of the main surface 14, 16 and lenslets 18 of the optical lens 10.

The withdrawal speed is controlled by the controlling system, and can be held constant over the withdrawal step, or be decreasing during the withdrawal step. The withdrawal speed may also be increased during the withdrawal step.

Such a decrease or increase of the withdrawal speed can be respectively implemented according to any type of a decreasing or increasing function of time, starting from a reference starting withdrawal speed.

The method then comprises a drying step DRY, during which at least part of the solvent contained in the coating fluid is evaporated, leaving a coating material forming the coating layer 20.

Through evaporation of the solvent, the coating material forms a hard layer covering the optical lens 10. Such evaporation may be accelerated through use of a gas flow and through control of ambient pressure and of ambient temperature.

The method then comprises a hardening step HRD, during which the coating material forming the coating layer 20 is cured.

The hardening step may include polymerization of an organic compound contained in the coating material, for example through photo-polymerization.

The method comprises a final step RDY, during which the finished optical lens 10 is taken out of the coating assembly 100.

The method also comprises a measuring step MEAS, during which a thickness of the coating layer 20 is measured.

The thickness of the coating layer 20 is measured by the measuring system, for example along an optical axis X of the optical lens 10, by one of the methods described above.

The measurement takes a few seconds and thus does not significantly slow the coating process.

The measuring step may take place after the drying step and before the hardening step. This allows the measured thickness to be close to the thickness of that of the coating layer 20 of the finished optical lens 10, the volume of solvent having been removed, but does not require to wait through the hardening step, allowing a faster measurement.

Alternatively, the measuring step can take place after the withdrawal step, before the drying step, to get the earliest measurement possible, at the cost of accuracy relative to the final thickness.

Alternatively, the measuring step can take place after the hardening step, to get the most accurate measurement of the thickness of the coating layer 20 relative to the final product, at the cost of speed.

The method further comprises an adjustment step ADJ, during which the withdrawal speed used during the withdrawal step is adjusted for future optical lenses 10, based on the measured thickness of the coating layer 20.

The measured thickness is compared to a desired nominal thickness of the coating layer 20 at the time of the measuring step, and the withdrawal speed is adjusted based on the difference. More particularly, the withdrawal speed is adjusted if the difference between the measured thickness of the coating layer and a desired nominal thickness is higher than or equal to 1.5%, 2%, 5%, 10%, 15%, 20%, 25%, 30%, 35%, 40%, 45%, 50%, 60%, or more.

The adjustment to the withdrawal speed may be determined through an empirical function of the difference between the measured thickness and the desired empirical thickness.

The empirical function may also depend on the fluidic properties of the coating fluid 112 and/or on the physical and mechanical properties of the main surfaces 14, 16 and of the lenslets 18 of the optical lens 10.

Alternatively, the adjustment is determined through a usual known control loop function.

The adjusted withdrawal speed is used during the withdrawal step for any further optical lens 10 loaded in the coating assembly 100, until further adjustment is made to the withdrawal speed.

The earlier the measurement of the thickness is made, the faster the withdrawal speed can be adjusted, reducing the number of lenses coated with an incorrect thickness of coating material. The method according to the invention thus allows for a better control of the thickness of the coating layer applied on an optical lens comprising lenslets.

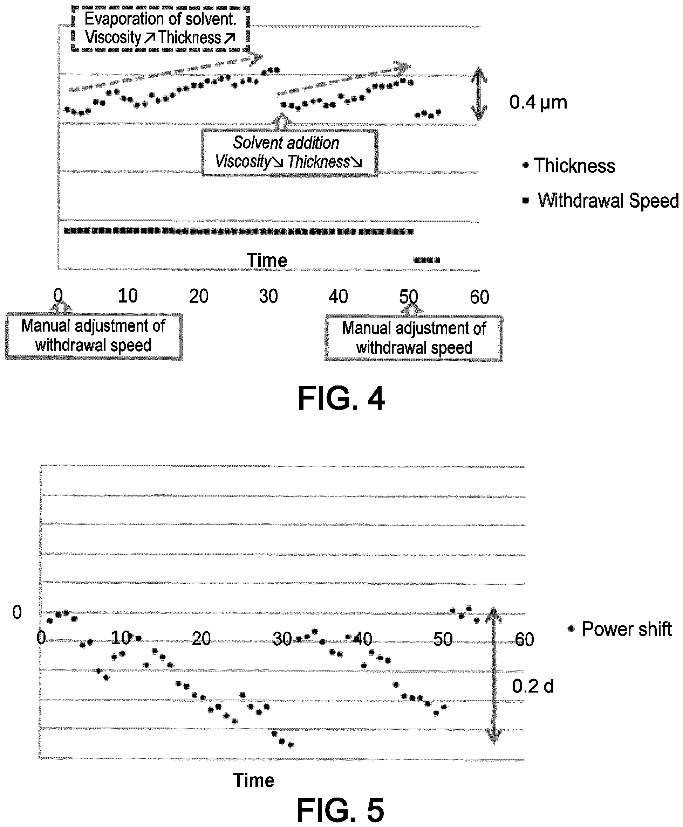

This significantly reduces the variability of the power shift of the lenslets in the final product. Figures 4 to 7 show this improvement over variability of the thickness of the coating layer and power shift of the lenslets, by comparing a method from the prior art, with manual control over the withdrawal speed, to the method described above.

Figure 4 is a plot of the coating thickness over time when implementing the manufacturing method from the prior art to coat a plurality of lenses comprising lenslets. Figure 4 also shows the withdrawal speed against time, with two manual adjustments of said withdrawal speed based on thickness measurements.

Figure 5 is a corresponding plot of the measured power shift of the lenslets of the coated lenses, on the same time scale.

Figures 4 and 5 show a variation in the fluidic properties of the coating fluid over time, notably its thickness, due to evaporation of the solvent. This leads to a variation in the thickness of the coating layer of 0.4 micrometers, and an ensuing variation in power shift of 0.2 diopters.

The viscosity of the solvent and the withdrawal speed are adjusted manually, with a 50-minute interval between both adjustments of the withdrawal speed, based on the measured thickness of the coating layer, in order to limit this variation.

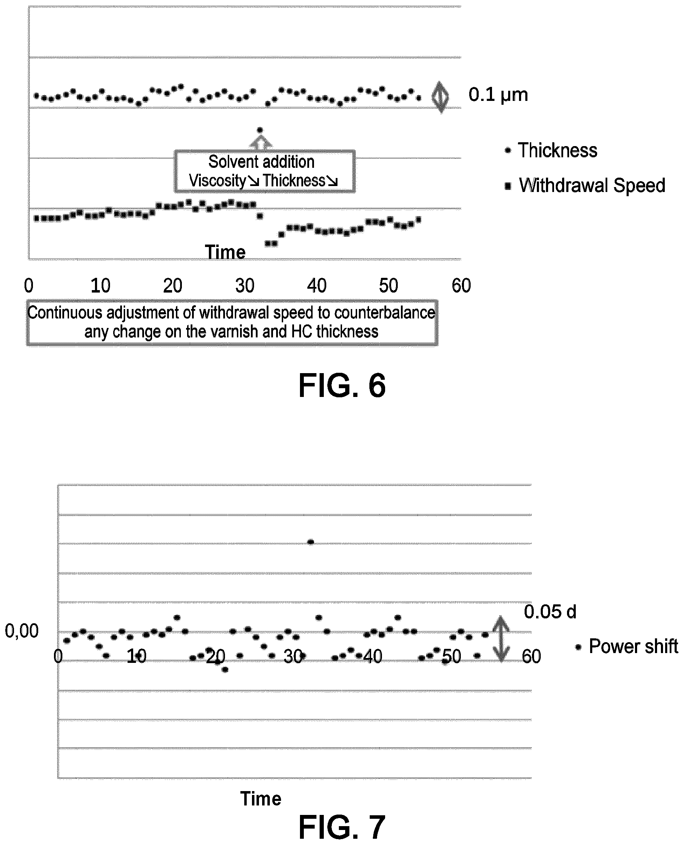

Figure 6 is a plot corresponding to figure 4, implementing the automatic adjustment of the withdrawal speed as described above. The thickness of the coating layer is measured continuously, and the withdrawal speed is continuously adjusted accordingly.

Figure 7 shows the power shift of the lenses obtained with this method and shows a variability of the power shift of 0.05 diopters, thus largely improved compared to the previous values.

The variability of thickness can thus be reduced by around 85%, with a variability of the power shift reduced from 0.2 diopters (d) to 0.05 d.

## Claims

1. A method for coating a plurality of optical lenses (10) having at least one main surface (14, 16) at least partly covered with lenslets (18), the method comprising:
- dipping (DIP) at least one first optical lens (10) from the plurality of optical lenses into a coating fluid (112),
- withdrawing (WDW) the at least one first optical lens (10) from the coating fluid (112) at a controlled withdrawal speed,
- measuring (MEAS) a thickness of a coating layer (20) deposited on the at least one first optical lens (10),
- determining (ADJ) an adjusted withdrawal speed based on the measured thickness, and
- repeating the steps of dipping (DIP), withdrawing (WDW), measuring (MEAS) and determining (ADJ) on at least other optical lenses (10) from the plurality of optical lenses (10), using the adjusted withdrawal speed during the withdrawing step (WDW).

2. The method according to claim 1, wherein the method comprises a step of drying (DRY) the coating layer (20) deposited on the first optical lens (10), the measuring step (MEAS) being implemented between the withdrawing step (WDW) and the drying step (DRY).

3. The method according to claim 1, wherein the method comprises a step of drying (DRY) the coating layer (20) deposited on the first optical lens (10) and a step of hardening (HRD) the coating layer (20) deposited on the first optical lens (10), the measuring step (MEAS) being implemented between the drying step (DRY) and the hardening step (HRD).

4. The method according to claim 1, wherein the method comprises a step of hardening (HRD) the coating layer (20) deposited on the first optical lens (10), the measuring step (MEAS) being implemented after the hardening step (HRD).

5. The method according to any of the previous claims, wherein the measuring step (MEAS) is implemented through a non-contact optical method.

6. The method according to any of the previous claims, wherein the method comprises a continuous adjustment of a viscosity of the coating fluid (112) in a dipping assembly where the dipping step (DIP) is implemented.

7. The method according to any of the previous claims, wherein the adjusted withdrawal speed is determined based on an empirical function of a difference between the measured thickness of the coating layer (20) and a desired nominal thickness.

8. Method according to claim 7, wherein the empirical function further depends on fluidical properties of the coating fluid (112) and surface mechanical and physical properties of the mains surface (14, 16) and lenslets (18).

9. Method according to any of the previous claims, wherein the withdrawal speed is kept constant during the withdrawing step (WDW).

10. Method according to any of claims 1 to 8, wherein the withdrawal speed progressively decreases during the withdrawing step (WDW).

11. A coating assembly (100) for coating optical lenses having at least one main surface (14, 16) at least partly covered with lenslets (18), the coating assembly (100) comprising:
- a dipping assembly comprising a tank (110) for receiving a coating fluid (112) and at least one mobile member (120) for dipping at least one optical lens (10) in the coating fluid (112) and withdrawing the optical lens (10) at a controlled withdrawal speed,
- a measuring system (MSYS) for measuring a thickness of a coating layer (20) deposited on the at least one optical lens (10), and
- a controlling system (CTRL) comprising a processing unit (PROC) and a memory (MEM), the controlling system (CTRL) being configured for controlling the measuring system (MSYS) and the mobile member (120),
wherein the controlling system (120) is configured to determine an adjusted withdrawal speed based on the measured thickness.

12. A computer program comprising one or more stored sequences of instructions that are accessible to a processing unit (PROC) of an assembly according to claim 11 and which, when executed by the processing unit (PROC), cause the processing unit (PROC) to carry out the method according to any one of claims 1 to 10.

13. A non-transitory storage medium storing one or more stored sequences of instructions of the computer program according to claim 12.

## Patentansprüche

1. Verfahren zum Beschichten einer Vielzahl von optischen Linsen (10), die mindestens eine Hauptfläche (14, 16), die zumindest teilweise mit Lenslets (18) bedeckt ist, aufweist, wobei das Verfahren Folgendes umfasst:
- Eintauchen (DIP) mindestens einer ersten optischen Linse (10) aus der Vielzahl von optischen Linsen in ein Beschichtungsfluid (112),
- Herausziehen (WDW) der mindestens einen ersten optischen Linse (10) aus dem Beschichtungsfluid (112) mit einer gesteuerten Herausziehgeschwindigkeit,
- Messen (MEAS) einer Dicke einer Beschichtungsschicht (20), die auf der mindestens einen ersten optischen Linse (10) abgeschieden wurde,
- Bestimmen (ADJ) einer angepassten Herausziehgeschwindigkeit auf der Grundlage der gemessenen Dicke und
- Wiederholen der Schritte von Eintauchen (DIP), Herausziehen (WDW), Messen (MEAS) und Bestimmen (ADJ) auf zumindest anderen optischen Linsen (10) aus der Vielzahl von optischen Linsen (10) unter Verwendung der angepassten Herausziehgeschwindigkeit, während des Herausziehschritts (WDW).

2. Verfahren nach Anspruch 1, wobei das Verfahren einen Schritt von Trocknen (DRY) der Beschichtungsschicht (20), die auf der ersten optischen Linse (10) abgeschieden wurde, umfasst, wobei der Messschritt (MEAS) zwischen dem Herausziehschritt (WDW) und dem Trocknungsschritt (DRY) implementiert ist.

3. Verfahren nach Anspruch 1, wobei das Verfahren einen Schritt von Trocknen (DRY) der Beschichtungsschicht (20), die auf der ersten optischen Linse (10) abgeschieden wurde, und einen Schritt von Härten (HRD) der Beschichtungsschicht (20), die auf der ersten optischen Linse (10) abgeschieden wurde, umfasst, wobei der Messschritt (MEAS) zwischen dem Trocknungsschritt (DRY) und dem Härtungsschritt (HRD) implementiert ist.

4. Verfahren nach Anspruch 1, wobei das Verfahren einen Schritt von Härten (HRD) der Beschichtungsschicht (20), die auf der ersten optischen Linse (10) abgeschieden wurde, umfasst, wobei der Messschritt (MEAS) nach dem Härtungsschritt (HRD) implementiert ist.

5. Verfahren nach einem der vorhergehenden Ansprüche, wobei der Messschritt (MEAS) durch ein kontaktloses optisches Verfahren implementiert ist.

6. Verfahren nach einem der vorhergehenden Ansprüche, wobei das Verfahren eine kontinuierliche Anpassung einer Viskosität des Beschichtungsfluids (112) in einer Eintauchanordnung, in der der Eintauchschritt (DIP) implementiert wird, umfasst.

7. Verfahren nach einem der vorhergehenden Ansprüche, wobei die angepasste Herausziehgeschwindigkeit auf der Grundlage einer empirischen Funktion einer Differenz zwischen der gemessenen Dicke der Beschichtungsschicht (20) und einer gewünschten Nenndicke bestimmt wird.

8. Verfahren nach Anspruch 7, wobei die empirische Funktion ferner von fluidischen Eigenschaften des Beschichtungsfluids (112) und mechanischen und physikalischen Oberflächeneigenschaften der Hauptfläche (14, 16) und der Lenslets (18) abhängt.

9. Verfahren nach einem der vorhergehenden Ansprüche, wobei die Herausziehgeschwindigkeit während des Herausziehschritts (WDW) konstant gehalten wird.

10. Verfahren nach einem der Ansprüche 1 bis 8, wobei die Herausziehgeschwindigkeit während des Herausziehschritts (WDW) progressiv abnimmt.

11. Beschichtungsanordnung (100) zum Beschichten optischer Linsen, die mindestens eine Hauptfläche (14, 16), die zumindest teilweise mit Lenslets (18) bedeckt ist, aufweisen, wobei die Beschichtungsanordnung (100) Folgendes umfasst:
- eine Eintauchanordnung, die einen Tank (110) zum Aufnehmen des Beschichtungsfluids (112) und mindestens ein mobiles Glied (120) zum Eintauchen mindestens einer optischen Linse (10) in das Beschichtungsfluid (112) und zum Herausziehen der optischen Linse (10) mit einer gesteuerten Herausziehgeschwindigkeit umfasst,
- ein Messsystem (MSYS) zum Messen einer Dicke einer Beschichtungsschicht (20), die auf der mindestens einen optischen Linse (10) abgeschieden wurde, und
- ein Steuersystem (CTRL), umfassend eine Verarbeitungseinheit (PROC) und einen Speicher (MEM), wobei das Steuersystem (CTRL) ausgelegt ist zum Steuern des Messsystems (MSYS) und des mobilen Glieds (120), wobei das Steuersystem (120) ausgelegt ist zum Bestimmen einer angepassten Herausziehgeschwindigkeit auf der Grundlage der gemessenen Dicke.

12. Computerprogramm, umfassend eine oder mehrere gespeicherte Sequenzen von Anweisungen, auf die von einer Verarbeitungseinheit (PROC) einer Anordnung nach Anspruch 11 zugegriffen werden kann, und die, bei Ausführung durch die Verarbeitungseinheit (PROC), die Verarbeitungseinheit (PROC) zum Ausführen des Verfahrens nach einem der Ansprüche 1-10 veranlassen.

13. Nichttransitorisches Speicherungsmedium, das eine oder mehrere gespeicherte Sequenzen von Anweisungen des Computerprogramms nach Anspruch 12 speichert.

## Revendications

1. Procédé de revêtement d'une pluralité de lentilles optiques (10) ayant au moins une surface principale (14, 16) au moins partiellement recouverte par des microlentilles (18), le procédé comprenant :
- le trempage (DIP) d'au moins une première lentille optique (10) issue de la pluralité de lentilles optiques dans un fluide de revêtement (112),
- le retrait (WDW) de l'au moins une première lentille optique (10) du fluide de revêtement (112) à une vitesse de retrait contrôlée,
- la mesure (MEAS) d'une épaisseur d'une couche de revêtement (20) déposée sur l'au moins une première lentille optique (10),
- la détermination (ADJ) d'une vitesse de retrait ajustée sur la base de l'épaisseur mesurée, et
- la répétition des étapes de trempage (DIP), retrait (WDW), mesure (MEAS) et détermination (ADJ) sur au moins d'autres lentilles optiques (10) issues de la pluralité de lentilles optiques (10), au moyen de la vitesse de retrait ajustée pendant l'étape de retrait (WDW).

2. Procédé selon la revendication 1, dans lequel le procédé comprend une étape de séchage (DRY) de la couche de revêtement (20) déposée sur la première lentille optique (10), l'étape de mesure (MEAS) étant mise en œuvre entre l'étape de retrait (WDW) et l'étape de séchage (DRY).

3. Procédé selon la revendication 1, dans lequel le procédé comprend une étape de séchage (DRY) de la couche de revêtement (20) déposée sur la première lentille optique (10) et une étape de durcissement (HRD) de la couche de revêtement (20) déposée sur la première lentille optique (10), l'étape de mesure (MEAS) étant mise en œuvre entre l'étape de séchage (DRY) et l'étape de durcissement (HRD).

4. Procédé selon la revendication 1, dans lequel le procédé comprend une étape de durcissement (HRD) de la couche de revêtement (20) déposée sur la première lentille optique (10), l'étape de mesure (MEAS) étant mise en œuvre après l'étape de durcissement (HRD).

5. Procédé selon l'une quelconque des revendications précédentes, dans lequel l'étape de mesure (MEAS) est mise en œuvre par un procédé optique sans contact.

6. Procédé selon l'une quelconque des revendications précédentes, dans lequel le procédé comprend un ajustement continu d'une viscosité du fluide de revêtement (112) dans un ensemble de trempage où l'étape de trempage (DIP) est mise en oeuvre.

7. Procédé selon l'une quelconque des revendications précédentes, dans lequel la vitesse de retrait ajustée est déterminée sur la base d'une fonction empirique d'une différence entre l'épaisseur mesurée de la couche de revêtement (20) et une épaisseur nominale souhaitée.

8. Procédé selon la revendication 7, dans lequel la fonction empirique dépend en outre de propriétés fluidiques du fluide de revêtement (112) et de propriétés mécaniques et physiques de surface des surfaces principales (14, 16) et des microlentilles (18).

9. Procédé selon l'une quelconque des revendications précédentes, dans lequel la vitesse de retrait est maintenue constante pendant l'étape de retrait (WDW).

10. Procédé selon l'une quelconque des revendications 1 à 8, dans lequel la vitesse de retrait diminue progressivement pendant l'étape de retrait (WDW).

11. Ensemble de revêtement (100) pour le revêtement de lentilles optiques ayant au moins une surface principale (14, 16) au moins partiellement recouverte par des microlentilles (18), l'ensemble de revêtement (100) comprenant :
- un ensemble de trempage comprenant une cuve (110) destinée à recevoir un fluide de revêtement (112) et au moins un élément mobile (120) destiné à tremper au moins une lentille optique (10) dans le fluide de revêtement (112) et retirer la lentille optique (10) à une vitesse de retrait contrôlée,
- un système de mesure (MSYS) destiné à mesurer une épaisseur d'une couche de revêtement (20) déposée sur l'au moins une lentille optique (10), et
- un système de contrôle (CTRL) comprenant une unité de traitement (PROC) et une mémoire (MEM), le système de contrôle (CTRL) étant configuré pour contrôler le système de mesure (MSYS) et l'élément mobile (120),
dans lequel le système de contrôle (120) est configuré pour déterminer une vitesse de retrait ajustée sur la base de l'épaisseur mesurée.

12. Programme informatique comprenant une ou plusieurs séquences d'instructions stockées qui sont accessibles à une unité de traitement (PROC) d'un ensemble selon la revendication 11 et qui, lorsqu'elles sont exécutées par l'unité de traitement (PROC), conduisent l'unité de traitement (PROC) à réaliser le procédé selon l'une quelconque des revendications 1 à 10.

13. Support de stockage non transitoire stockant une ou plusieurs séquences d'instructions stockées du programme informatique selon la revendication 12.
